# EUROPEAN PATENT APPLICATION

(11) **EP 1 367 696 A1**
(43) Date of publication of application: **03.12.2003**
(21) Application number: 03076333.8
(22) Date of filing: 06.05.2003
(51) Int. Cl.: H02K 7/108, H02K 7/10

(54) **Two speed drive systems and methods**

(30) Priority: 30.05.2002 US 158671
(71) Applicant: Delphi Technologies, Inc., Troy, MI 48007 (US)
(72) Inventor: Wilder, Frank A., Indianapolis, IN 46236 (US); Rasmussen, Loren H., Kokomo, IN 46901 (US)
(74) Representative: Denton, Michael John

(57) **Abstract**

An electric machine (12) for a vehicle comprising a shaft (17), a first one-way-clutch (38) between the shaft and a driving member (28); and a second one-way-clutch (32) between the shaft and a driven member (30) is provided. The shaft is rotatably received within the electric machine. The first one-way-clutch transmits a first torque (24) from the shaft to the driving member, but does not transmit a second torque (26) from the driving member to the shaft. The second one-way-clutch transmits the second torque from the driven member to the shaft, but does not transmit the first torque from the shaft to the driven member.

## Description

### TECHNICAL FIELD

This application relates generally to two speed drive systems and methods. More specifically, this application relates to two-speed drive systems for electric machines used in conjunction with internal combustion engines.

### BACKGROUND

Internal combustion engines currently include two machines performing separate functions. The first machine is a starter machine for providing a starting torque to the crankshaft of the engine in order to facilitate the initiation of the combustion process of the engine. The second machine is a generator or alternator machine for receiving an input torque from the engine in order to generate an electrical output for meeting the electrical loads of the vehicle, as well as to charge the vehicle's battery.

The concept of using only one electric machine to do both functions, namely starting and generating, adds efficiency, and reduces assembly time. Additionally, the system allows a quiet stop-start capability. Here, the engine is allowed to stop and restart in slow moving (e.g., stop-and-go) traffic scenarios. This quiet stop-start capability provides both fuel saving and pollution reducing benefits. Efficiency is also increased because such starting and generating electric machines use less space, weigh less, eliminate the cost of one of the machines, and reduce assembly time. However, starting and generating electric machines give rise to issues that affect the cost, complexity, and reliability of such systems.

For example, starting and generating electric machines are often driven by a single belt or chain coupling the electric machine to the engine crankshaft. When a single speed belt or chain is used, the torque input changes between the starting and the generating functions. More specifically, during starting the electric machine applies an engine cranking torque to rotate the engine crankshaft. Once the engine has been started, a generating torque is applied by the crankshaft to the electric machine. Accordingly, a tensioning problem occurs in the belt or chain drive. Namely, the belt or chain drive has its tight side and slack side reverse depending on which torque is being applied. Accordingly, bi-directional tensioning devices are often required, which add to the cost, complexity, and decreased reliability of starting and generating electric machines.

Additionally, there is a gap between the torque and speed required to start an engine and the torque and speed required to generate electricity. High starting torques are due to compression stroke pressures, friction, cold lubrication, and the like. If a starter cannot rotate the crankshaft, a locked rotor condition exists on the starter rotor. This causes large current drains and excessive heat on the starting circuit with possible risk of damage and a no-start condition. A typical starter motor has a geared ratio of approximately 12 to 1, and has robust winding and heavy construction to avoid the risk of such locked rotor conditions. In this way, temporary overloads are accommodated.

A starter-generator unit typically solves this problem by use of large components, high pulley ratios, and/or combinations thereof. A starter-generator with about a 3 to 1 ratio is suitable for use in smaller engines with lower starting torques such as lawn mowers, golf carts, and the like. In order to provide a higher starting torque, a large crankshaft pulley combined with a small starter generator pulley can be used to provide a ratio of about 10 to 1. This larger ratio would increase the available starting torque from the starter generator. However, this larger ratio cannot be used during the generation of electricity. This is because during automotive applications, the generation of electricity a high engine speed, such as 6,000 revolutions per minute (rpm), exists. The high engine speed (6,000 rpm) combined with the large ratio (10:1) would create a generator speed of about 60,000 rpm. Such high generator speeds may cause damage to one or more components of the starter-generator (e.g., the rotor). A limit of about 18,000 rpm is common for most automotive generators.

One possible solution to the differing torque and speed requirements in starter-generator units is the use of a transmission having a different ratio for each of the starting function and the generating function. Such a transmission would require a gearbox and a switching clutch, which would add to the cost, complexity, and decreased reliability of starting and generating system.

Thus, a starter-generator that eliminates the aforementioned and other problems is desired.

### SUMMARY

An electric machine for a vehicle comprising a shaft, a first one-way-clutch between the shaft and a driving member; and a second one-way-clutch between the shaft and a driven member is provided. The shaft is rotatably received within the electric machine. The first one-way-clutch transmits a first torque from the shaft to the driving member, but does not transmit a second torque from the driving member to the shaft. The second one-way-clutch transmits the second torque from the driven member to the shaft, but does not transmit the first torque from the shaft to the driven member.

A method for transmitting torques between a first shaft and a second shaft is provided. The method comprises applying a first torque to a driving member of the first shaft, the driving member of the first shaft being coupled to a driven member of the second shaft such that the first torque causes the second shaft to be rotated by the driven member; applying a second torque to a driving member of the second shaft, the driving member of the second shaft being coupled to a driven member of the first shaft such that the second torque causes the first shaft to be rotated by the driven member; preventing the first torque from rotating the driven member of the first shaft via a first one-way-clutch; and preventing the second torque from rotating the driving member of the first shaft via a second one-way-clutch.

A two-speed drive system for operatively connecting a first machine and a second machine is provided. The two-speed drive system comprises a first assembly, and a second assembly. The first assembly has a first driving member and a first driven member on a first shaft of the first machine. The first shaft receives a first torque from the first machine. The second assembly has a second driving member and a second driven member on a second shaft of the second machine. The second shaft receives a second torque from the second machine. A first coupling means engages the first driving member and the second driven member. A second coupling means engages the second driving member and the first driven member. A means for transmitting torque from the first shaft to the second shaft transmits the first torque from the first shaft to the first driving member without being transmitted to the first driven member. A means for transmitting torque from the second shaft to the first shaft transmits the second torque from the second shaft to the second driving member without being transmitted to the second driven member.

The above-described and other features are appreciated and understood by those skilled in the art from the following detailed description, drawings, and appended claims.

### BRIEF DESCRIPTION OF THE DRAWINGS

Figure 1 is a perspective view of an exemplary embodiment of a two-speed drive system;
Figure 2 is a top view of the two-speed drive system of Figure 1;
Figures 3-5 are top views of alternate exemplary embodiments of two-speed drive systems;
Figure 6 is a perspective view of an alternate exemplary embodiment of a two-speed drive system;
Figure 7 is a block diagram of a circuit for a starting and generating electric machine;
Figure 8 is a first step of a control sequence of the circuit of Figure 7;
Figure 9 is a second step of a control sequence of the circuit of Figure 7;
Figure 10 is a third step of a control sequence of the circuit of Figure 7; and
Figure 11 is a fourth step of a control sequence of the circuit of Figure 7.

### DESCRIPTION OF THE PREFERRED EMBODIMENT

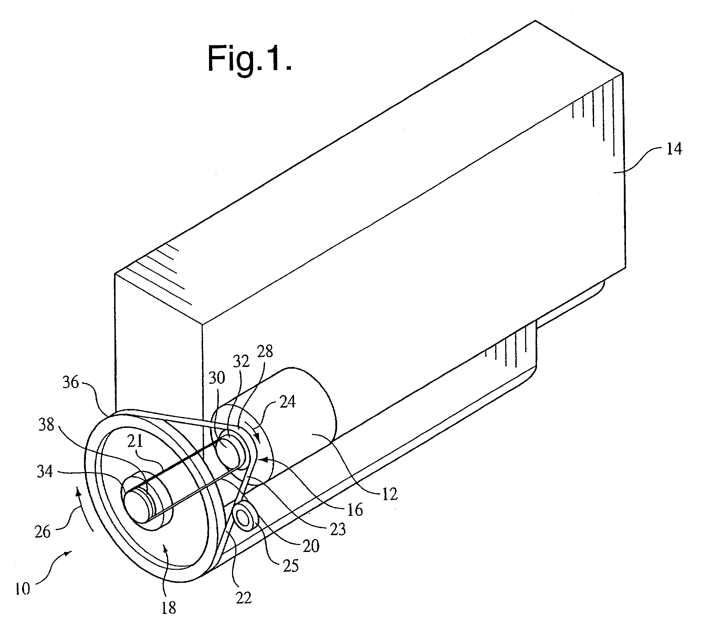

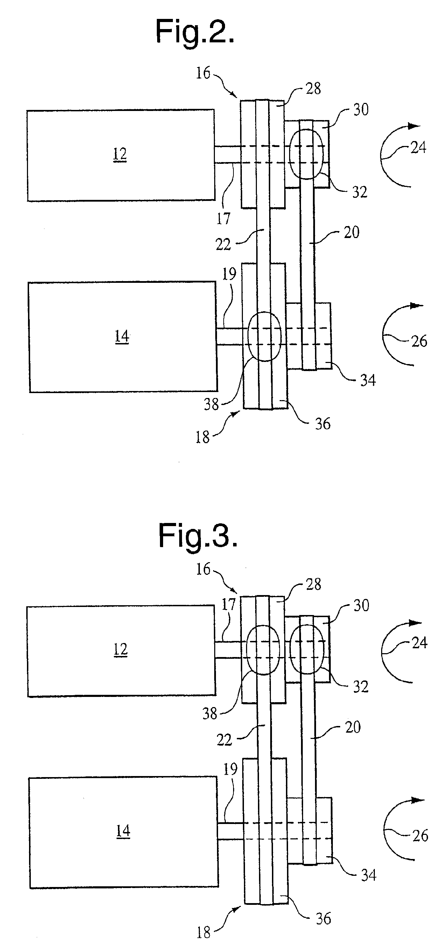

Referring now to Figures 1 and 2, a two-speed drive system 10 is illustrated. Two-speed drive system 10 operatively connects an electric machine 12 and an internal combustion engine 14. Electric machine 12 is adapted to provide a starting torque for starting engine 14, as well as generating electricity by receiving a generating torque from the started engine. Two-speed drive system 10 is a simple and inexpensive means for connecting the torques of electric machine 12 and engine 14. It should be recognized that two-speed drive system 10 is capable of use in applications other than operatively connecting electric machine 12 and engine 14, namely in applications where a two-speed drive system operatively connects two machines each capable of driving one another.

Electric machine 12 includes a pulley assembly 16 connected to a shaft 17. Pulley assembly 16 comprises a driving pulley 28, a driven pulley 30, and a one-way clutch 32 positioned between shaft 17 and the driven pulley 30.

Engine 14 includes a pulley assembly 18 connected to a crankshaft 19. Pulley assembly 18 comprises a driving pulley 34, a driven pulley 36, and a one-way clutch 38 positioned between crankshaft 19 and the driven pulley 36.

One-way clutches 32 and 38 are configured to only transmit torque to or from a shaft. Such one-way clutches are also known as overrunning clutches, sprag type clutches, roller clutches, and the like. For example, such one-way clutches are described in U.S. Patent Nos. 5,183,139, 5,279,399, 5,676,226, and 5,718,314, the contents of which are incorporated herein by reference thereto.

A starting belt 22 is configured to frictionally engage the driving pulley 28 and the driven pulley 36 when the electric machines is mounted in close proximity to the engine. A generating belt 20 is configured to frictionally engage driving pulley 34 and driven pulley 30.

During a starting operation, the electric machine 12 applies a clockwise starting torque 24 to shaft 17. The driving pulley 28 is fixedly engaged to the shaft 17 by means such as, but not limited to, welding, a key and keyway, bolts, and the like. The driving pulley 28 converts the starting torque 24 from shaft 17 to a driving force on the starting belt 22 to drive the starting belt in a clockwise direction. The starting belt 22 frictionally engages the driving pulley 28 and the driven pulley 36. Accordingly, the starting belt 22 transfers the driving force of the belt 22 to driven pulley 36 of pulley assembly 18. Driven pulley 36 converts the driving force to a torque on crankshaft 19 through one-way clutch 38.

Specifically, the one-way clutch 38 is adapted to transmit torques from the driven pulley 36 to the crankshaft 19. However, and as described below in more detail, the one-way clutch 38 is not adapted to transmit torques from the crankshaft 19 to the driven pulley 36 once the engine 14 has been started. In this manner, the application of starting torque 24 by shaft 17 drives the crankshaft 19, which in turn facilitates the starting of the engine 14.

In addition, the driven pulley 30 is coupled to shaft 17 by way of one-way clutch 32. One-way clutch 32 is not adapted to transmit torques from the shaft 17 to the driven pulley 30, but it is adapted to transmit torque from the driven pulley 30 to the shaft 17 as described below in more detail (e.g., during a generating operation of electric machine 12). Thus and during the starting operation, the starting torque 24 applied to shaft 17 by the electric machine 12 is not transmitted to the driven pulley 30. In contrast, during the starting operation the driven pulley 30 "spins" or "free wheels" on shaft 17 when the starting torque 24 is applied by the shaft.

Once the engine 14 has been started, the engine 14 applies a clockwise generating torque 26 to crankshaft 19. The driving pulley 34 is fixedly engaged to the crankshaft 19 by for example, a key and keyway. The driving pulley 34 converts the generating torque 26 from the crankshaft 19 to a driving force on the generating belt 20 to drive the generating belt in a clockwise direction. The generating belt 20 frictionally engages the driving pulley 34 and the driven pulley 30. Accordingly, the generating belt 20 transfers the driving force of the belt 20 to the driven pulley 30. The driven pulley 30 converts the driving force to a torque on shaft 17 through one-way clutch 32.

Specifically, the one-way clutch 32 is adapted to transmit torques from the driven pulley 30 to the shaft 17. However and as provided above, the one-way clutch 32 is not adapted to transmit torques from the shaft 17 to the driven pulley 30 during the starting of the engine 14. In this manner, the application of generating torque 26 by crankshaft 19 drives the shaft 17, which in turn facilitates the generation of electricity by the electric machine 12.

In addition, the driven pulley 36 is coupled to crankshaft 19 by way of one-way clutch 38. One-way clutch 38 is not adapted to transmit torques from the crankshaft 19 to the driven pulley 36, but it is adapted to transmit torque from the driven pulley 28 to the crankshaft 19. Accordingly, while the engine 14 is being started or has been started the generating torque 26 applied to the crankshaft 19 is not transmitted to the driven pulley 36. Once the engine has been started (e.g., during a generating operation) the driven pulley 36 "spins" or "free wheels" on crankshaft 19 when the generating torque 26 is applied by the crankshaft.

Accordingly, the two-speed drive system 10 is configured to transmit only one of the starting torque 24 and the generating torque 26 at a time. In other words, one-way clutch 32 is configured to "freely spin" or "free wheel" driven pulley 30 on shaft 17 when the electric machine 12 applies the starting torque 24 to the shaft, but is configured to transmit the torque generated from crankshaft 19 to shaft 17. Conversely, one-way clutch 38 is configured to "freely spin" or "free wheel" driven pulley 36 on the crankshaft 19 when the engine 14 applies generating torque 26 to the crankshaft, but is configured to transmit the torque generated from shaft 17 to crankshaft 19.

Since the two-speed drive system 10 transmits the torque from the driving pulleys 28 or 34 to only one belt 20 or 22 at a time, the belts require tensioning only on one side. Specifically, each belt has a tight side (e.g., a pulled side) and a slack side (e.g., a low tension side), and tensioning is only needed on the slack side of each belt. In the embodiment of Figure 1, the generating belt 20 has a slack side 21, while starting belt 22 has a slack side 23. Here, the starting torque 24 from the driving pulley 28 results in the slack side 23. Similarly, the generating torque 26 from the driving pulley 34 results in the slack side 21.

In a first exemplary embodiment, tensioning is provided to the slack side of the belts 20 and 22 by way of a combination of a tensioning pulley and adjustably mounting the electric machine 12.

The electric machine 12 is adjustable to provide tension to the slack side 21 of the generating belt 20. Here, the electric machine is adjusted during installation until the belt 20 is taut or has been provided with the prescribed tension. At that point, the electric machine 12 is secured in the adjusted position by, for example, securement to the engine 14.

A tensioning pulley 25 is positioned on the starting belt 22 to provide tension to the slack side 23. Here, the tensioning pulley 25 is operatively engaged with either the inner or the outer surface of the starting belt 22 to provide tension to the slack side 23 of the belt. The tensioning pulley 25 is rotatable mounted on a shaft or structure (not shown) such that tension is provided to the slack side 23 as the starting belt 22 is rotated.

In a first exemplary embodiment, the tensioning pulley 25 is constantly biased into operative engagement with the starting belt 22. In an alternate exemplary embodiment, the tensioning pulley 25 is adjustable to ensure that the belt 22 is taut or has been provided with the prescribed tension. Here, the tensioning pulley 25 is secured in position once the belt 22 is taut or has been provided with the prescribed tension.

Thus, the electric machine 12 provides tension to the slack side 21 of the generating belt 20 by way of its adjustable mounting, while the tensioning pulley 25 provides tension to the slack side 23 of the starting belt 22.

It should be recognized that tension is provided by way of example as being provided to the generating belt 20 by adjusting the electric machine 12 and to the starting belt 22 by the tensioning pulley 25. Of course, it is contemplated for the tensioning pulley 25 to provide tension to the generating belt 20 and the adjustable mounting of the electric machine 12 to provide tension to the starting belt 22.

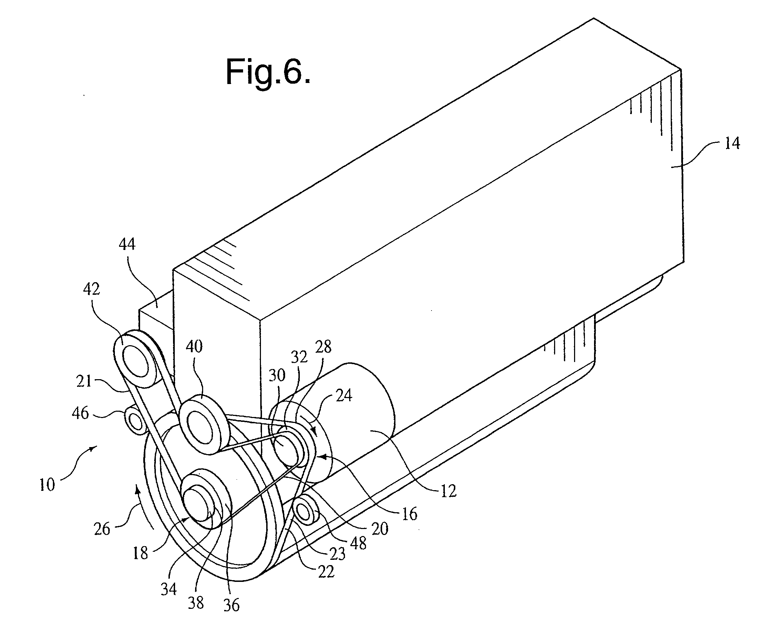

Alternately and as described with respect to Figure 6, it is contemplated for a tensioning pulley to be provided at each of the belts 20 and 22 to provide the prescribed tension.

It should also be recognized that pulley assembly 16 is described above by way of example only as including one-way clutch 32, and pulley assembly 18 is described above by way of example only as including one-way clutch 38. Of course, any location for one-way clutches 32 and 38 that ensures transmission of only one of the torques 24 and 26 at a time are contemplated. For example, in Figure 3 pulley assembly 16 is illustrated as comprising both one-way clutches 32 and 38. Specifically in Figure 3, the one-way clutch 32 is positioned between the shaft 17 and the driven pulley 30, and the one-way clutch 38 is positioned between the shaft 17 and the driving pulley 28. In this manner, the driving pulley 28 is driven by the shaft 17, while the driven pulley 30 drives the shaft 17.

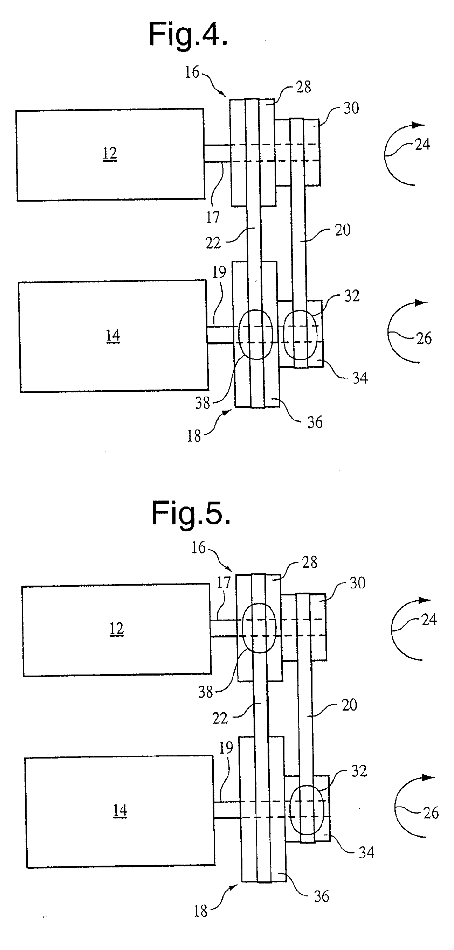

Alternately, in Figure 4 pulley assembly 18 is illustrated as comprising both one-way clutches 32 and 38. Here, the one-way clutch 32 is positioned between the crankshaft 19 and the driving pulley 34, and the one-way clutch 38 is positioned between the crankshaft 19 and the driven pulley 36. In this manner, the driving pulley 34 is driven by the crankshaft 19, while the driven pulley 36 drives the crankshaft 19.

In Figure 5, pulley assembly 18 comprises one-way-clutch 32, while pulley assembly 16 comprises one-way-clutch 38. Here, the one-way clutch 32 is positioned between the crankshaft 19 and the driving pulley 34, and the one-way clutch 38 is positioned between the shaft 17 and the driving pulley 28. In this manner, the driving pulley 28 is driven by the shaft 17, while the driving pulley 34 is driven by the crankshaft 19.

In all embodiments, one-way-clutches 32 and 38 are configured such that two-speed drive system 10 transmits the torques generated by either the starting torque or the generating torque at a time.

As described above, there is a gap between the torque and speed required to start engine 14 and the torque and speed required to generate electricity from electric machine 12. More specifically, the starting torque 24 is generally higher than the generating torque 26 because the starting torque must overcome the engine compression to start the engine, while the generating torque must only rotate a rotor within the electric machine 12. Two-speed drive system 10 mitigates the differing torque and speed requirements through the use separate belts 20 and 22 for starting and generating. Hence, starting belt 22 allows driving pulley 28 of pulley assembly 16 and driven pulley 36 of pulley assembly 18 to provide a starting ratio, while generating belt 20 allows driving pulley 34 of pulley assembly 18 and driven pulley 30 of pulley assembly 16 to provide a generating ratio.

For example and in accordance with an exemplary embodiment, the starting ratio between pulley assembly 16 and pulley assembly 18 is between about 3:1 and 10:1, while the generating ratio between pulley assembly 18 and pulley assembly 16 is between about 2:1 and 3:1. In the example where the starting ratio between pulley assembly 16 and pulley assembly 18 is 6:1, for every six revolutions of the shaft 17, the crankshaft 19 rotates one time. Similarly, in the example where the generating ratio between pulley assembly 16 and pulley assembly 18 is 3:1, for every three revolutions of the shaft 17, the crankshaft 19 rotates one time.

Thus, two-speed drive system 10 provides a means for providing tension to belts 20 and 22, while also providing for separate starting and generating ratios. Of course, alternate starting and generating ratios greater than or less than the aforementioned ratios are contemplated in accordance with the present disclosure.

Referring now to Figure 6, an alternate embodiment of two-speed drive system 10 is illustrated. Here, engine 14 further includes one or more accessory pulleys, namely pulley 40 and pulley 42. The pulleys 40 and 42 are frictionally engaged to the generating belt 20, which now takes on the further task of an accessory belt. In this manner, the accessory pulleys 40 and 42 are driven by the crankshaft 19 to drive other vehicle accessory systems, including but not limited to engine cooling systems, air conditioning systems, power steering systems, and the like. For example, the pulley 40 is illustrated for driving a water pump (not shown) for an engine cooling system (not shown) of engine 14, while the pulley 42 is illustrated driving a power steering pump 44.

Occasionally a gap exists between the torque and speed required for operation of electric machine 12 and the torque and speed required for operation of accessories coupled to the pulleys 40 and 42. In this instance, the pulleys 40 and 42 are configured to provide ratios sufficient to compensate for any torque and speed differences.

In the embodiment of Figure 6, tensioning is provided to the slack side 21 of belt 20 by a first tensioning pulley 46, and tensioning is provided to the slack side 23 of belt 22 by a second tensioning pulley 48. The tensioning pulleys 46 and 48 are operatively engaged with the belts 20 and 22, respectively, to provide tension to the slack side of the belts. Namely and as described above with respect to Figure 1, the tensioning pulleys 46 and 48 can be constantly biased into operative engagement with the inside or outside surface of the belts, and/or can be adjustable to ensure that the belts are taut. The tensioning pulleys 46 and 48 are rotatable mounted on a shaft or structure (not shown) such that tension is provided to the slack sides 21 and 23, respectively, as the belts 20 and 22 are rotated.

In the embodiments of Figures 1-6, the two-speed drive system 10 is described by way of example only as a belt-driven system. However, it should be recognized that the two-speed drive system 10 can be used with other coupling means, for example, chain-driven systems, gear-driven systems, combinations thereof, and the like. In a chain-driven system, pulley assemblies (16 and 18) are sprocket assemblies, and belts (20 and 22) are chains. In a gear-driven system, pulley assemblies (16 and 18) are gear assemblies, and belts (20 and 22) are eliminated. In the gear-driven system, the gear assemblies may be directly meshed to one another, or alternately intermediate gears may be used to mesh the gear assemblies to one another.

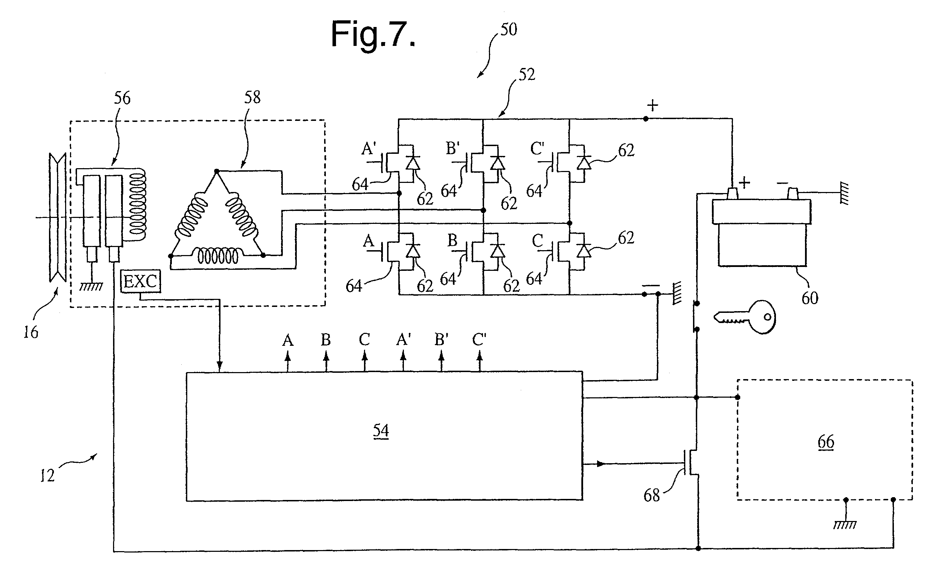

The starting and generating operation of an electric machine capable of providing a motor torque to a shaft, as well as generating an electrical current in response to receiving another motor torque from the shaft is described by way of example with respect to a circuit 50 illustrated in Figures 7 through 11. The electric machine is a three-phase rotary machine including a rectifier bridge 52 and a unit 54 for controlling the rectifier bridge. The electric machine includes a coil-carrying rotor 56 constituting the primary magnetic circuit associated with two rings and with two brushes that convey excitation current (of the order of a few amps); and a stator 58 carrying a plurality of coils constituting the secondary magnetic circuit, connected in star or delta configuration in the common case of a three-phase structure and acting, during generating operation, to deliver converted electrical power to the rectifier bridge 52 (several tens of amps at a voltage of the same order as the battery voltage).

Bridge 52 is connected to the various phases of the stator 58 and is connected between ground and a power supply terminal of a battery 60. Bridge 52 includes a plurality of diodes 62 forming a rectifier bridge, and a plurality of switches 64, such as transistors. Switches 64 are connected in parallel with respective diodes 62 and control the various phases (e.g., starting and generating) of the electric machine.

During a starting function, diodes 62 act as freewheel diodes, whereas in a generating function, the diodes act as a rectifier bridge. Switches 64 are advantageously MOSFET type transistors. Switches 64 include a diode between drain and source. Consequently, the switches 64 enable bridge 52 to be implemented using transistor components only that then act both as switches and as freewheel diodes.

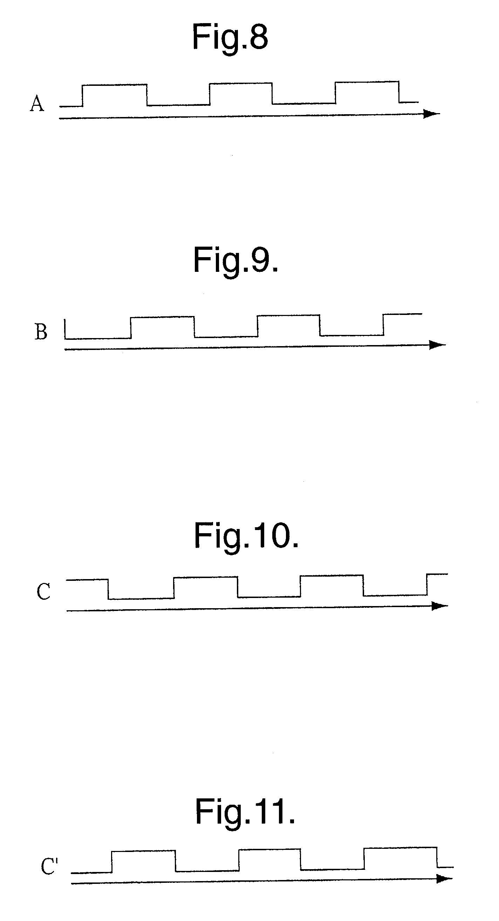

The starting function of the electric machine is achieved by imposing DC on the primary magnetic circuit rotor 56 and by delivering signals that are phase-shifted by 120 degrees to the phases of stator 58, which signals are ideally sinewave signals, but may optionally be squarewave signals or trapezoidal wave signals. Referring now to Figures 8-11, an example of a control sequence for switches 64 is illustrated. The sequence is made up of squarewave signals issued by the control unit. The signals A, B, and C shown in these Figures are control signals for those of switches 64 in bridge 52 which are connected to ground. The signals A', B', and C' which control the other transistors, i.e. those connected to battery 60, are signals that are inverted relative to the signals A, B, and C, without overlapping them. This is shown in Figure 11 where the signal C' is drawn for controlling the transistor connected to the transistor controlled by the signal C. With this kind of control, the rotor performs one full revolution while each of the phases goes through a number of periods equal to the number of pairs of poles of the rotor (e.g. eight).

This starting operation is used for example to generate a starting torque to start an engine, thereby making it possible to eliminate the starter and the associated drive ring, and also the power cabling generally associated with the starter motor. To enable the engine to be started in this way, the control signals for switches 64 are advantageously variable frequency signals, at a frequency that is regulated to be increasing by unit 54, so as to avoid any slip of the rotor relative to the rotating magnetic field created by the stator. For example, frequency regulation may be provided by unit 54 in such a manner so as to guarantee that the alternator has a speed profile that enables an engine to be started.

Control unit 54 includes a means for recognizing a code signal that authorizes engine starting. This signal is transmitted to the unit 54 by a code transmitter means inside the vehicle. The unit 54 switches on the transistors 64 in a manner suitable for starting the engine only if it receives the code signal. Consequently, the control unit 54 and the code transmitter means, which transmit the unlocking signal to the unit, constitute a system for immobilizing the engine.

After the engine is started, unit 54 controls the transistors 64 to operate in a generating mode. Unit 54 controls switches 64 so that all of them are open circuit across the terminals of all of the diodes. The bridge 52 then reverts to being a rectifier bridge. In another possible embodiment, the transistors 64 are controlled to short-circuit the conductive diodes. They are caused to be open circuit only across the terminals of non-conductive diodes. Thus, a current no longer passes through the conductive diodes, such that the short circuits made in this way serve to reduce losses. To synchronize control of transistors 64 relative to the switching from the conductive state to the non-conductive state of diodes 62, unit 54 is connected to a means for detecting when the diodes pass from one state to another. By way of example, these means may be constituted by a sensor, such as a Hall effect sensor, for measuring the angular position of the rotor relative to the stator. Such a sensor may also be used for determining the speed of the rotor, e.g. by counting pulses in a given time window, so as to enable the unit to detect that the engine has started and thus switch from operating in starting mode to operating in generating mode.

Control unit 54 also includes a means for allowing a stop-start capability of the engine 14. Here, the engine 14 is allowed, for example, to stop and restart in slow moving (e.g., stop-and-go) traffic scenarios.

Also, means 66 are provided for regulating voltage so as to maintain the voltage of battery 60 at a suitable level. Provision is also made for a switch 68, e.g. another MOSFET type switch, whose ON or OFF state is controlled by the control unit. Switch 68 is designed to short circuit the regulator in starting mode so that the secondary magnetic circuit 58 is then directly excited by battery 60.

It should be recognized that the operation of the electric machine has been described above by way of example with respect to Figures 7-11. Of course, and as applications require, alternate means of operating an electric machine to apply a starting torque, and receive a generating torque are contemplated for use with the drive system of the present disclosure.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An electric machine (12) for a vehicle, comprising:
a shaft(17) being rotatably received within said electric machine;
a first one-way-clutch (38) being positioned between said shaft and a driving member (28), said first one-way-clutch being configured to transmit a first torque (24) from said shaft to said driving member, but does not transmit a second torque (26) from said driving member to said shaft; and
a second one-way-clutch (32) being positioned between said shaft and a driven member (30), said second one-way-clutch transmits said second torque from said driven member to said shaft, but does not transmit said first torque from said shaft to said driven member.

2. The electric machine as in claim 1, wherein said electric machine is configured to operate in a generating mode when said second one-way-clutch transmits said second torque from said driven member to said shaft.

3. The electric machine as in claim 1, wherein said driving member and said driven member are selected from the group consisting of pulleys, sprockets, direct gear meshing, and intermediate gears.

4. The electric machine as in claim 3, wherein said driving member has a first ratio and said driven member has a second ratio.

5. The electric machine as in claim 1, further comprising a first tensioning pulley (25) configured to provide tension to a first coupling means (22) positionable on said driving member.

6. The electric machine as in claim 5, further comprising means for adjustably mounting the electric machine such that tension is provided to a second coupling means (20) positionable on said driven member.

7. The electric machine as in claim 1, further comprising a second tensioning pulley (40) configured to provide tension to a second coupling means (20) positionable on said driven member.

8. The electric machine as in claim 7, further comprising means for adjustably mounting the electric machine such that tension is provided to a first coupling means (22) positionable on said driving member.

9. A method for transmitting torques between a first shaft (17) and a second shaft (19), comprising:
applying a first torque (24) to a driving member (28) of said first shaft, said driving member of said first shaft being coupled to a driven member (36) of said second shaft such that said first torque causes said second shaft to be rotated by said driven member;
applying a second torque (26) to a driving member (34) of said second shaft, said driving member of said second shaft being coupled to a driven member (30) of said first shaft such that said second torque causes said first shaft to be rotated by said driven member;
preventing said first torque from rotating said driven member of said first shaft via a first one-way-clutch (32); and
preventing said second torque from rotating said driving member of said first shaft via a second one-way-clutch (38).

10. The method as in claim 9, further comprising:
positioning both said first one-way-clutch and said second one-way-clutch between said first shaft and said driving and driven members of said first shaft, or between said second shaft and said driving and driven members of said second shaft.

11. The method as in claim 9, further comprising:
positioning said first one-way-clutch between said first shaft and said driving member of said first shaft and said second one-way-clutch between said second shaft and said driving member of said second shaft; or
positioning said first one-way-clutch between said first shaft and said driven member of said first shaft and said second one-way-clutch between said second shaft and said driven member of said second shaft.

12. The method as in claim 9, wherein said driving member of said first shaft and said driven member of said second shaft are configured to provide a first ratio therebetween.

13. The method as in claim 12, further comprising:
engaging said driving member of said first shaft to said driven member of said second shaft via a first coupling means (22) selected from the group consisting of a belt, a chain, direct gear meshing, and intermediate gears.

14. The method as in claim 13, further comprising:
tensioning said belt or said chain by way of a tensioning pulley (25, 48) and/or an adjustable mounting.

15. The method as in claim 9, wherein said driving member of said second shaft and said driven member of said first shaft are configured to provide a second ratio therebetween.

16. The method as in claim 15, further comprising:
engaging said driving member of said second shaft to said driven member via a second coupling means (20) selected from the group consisting of belt, a chain, direct gear meshing, and intermediate gears.

17. The method as in claim 16, further comprising:
tensioning said belt or chain by way of a tensioning pulley (46) and/or an adjustable mounting.

18. A two-speed drive system for operatively connecting a first machine (12) and a second machine (14), comprising
a first assembly (16) having a first driving member (28) and a first driven member (30) on a first shaft (17) of said first machine, said first shaft being configured to receive a first torque (24) from said first machine;
a second assembly (18) having a second driving member (34) and a second driven member (36) on a second shaft (19) of said second machine, said second shaft being configured to receive a second torque (26) from said second machine;
a first coupling means (22) engaging said first driving member and said second driven member;
a second coupling means (20) engaging said second driving member and said first driven member;
means for transmitting torque (32) from said first shaft to said second shaft wherein said first torque is transmitted from said first shaft to said first driving member without being transmitted to said first driven member; and
means for transmitting torque (38) from said second shaft to said first shaft wherein said second torque is transmitted from said second shaft to said second driving member without being transmitted to said second driven member.

19. The two-speed drive system as in claim 18, wherein said means for transmitting torque from said first shaft to said second shaft comprises a first one-way-clutch and said means for transmitting torque from said second shaft to said first shaft comprises a second one-way-clutch.

20. The two-speed drive system as in claim 18, wherein said first and second coupling means are selected from the group consisting of belts, chains, direct gear meshing, and intermediate gears.

21. The two-speed drive system as in claim 20, further comprising means for providing tension to said belts and chains.

22. The two-speed drive system as in claim 21, wherein said means for providing tensioning is selected from the group consisting of a tensioning pulley (25, 46, 48) and an adjustable mounting.

23. The two-speed drive system as in claim 18, further comprising:
a first ratio being defined by said first driving member and said second driven member.

24. The two-speed drive system as in claim 23, further comprising:
a second ratio being defined by said second driving member and said first driven member.

25. The two-speed drive system as in claim 23, wherein said first ratio is between about 3:1 and 10:1, and said second ratio is between about 2:1 and 3:1.

26. The two-speed drive system as in claim 18, wherein said first machine is an electric machine, and said second machine is an internal combustion engine.

27. The two-speed drive system as in claim 26, wherein said electric machine is a starter generator.
